# EUROPÄISCHE PATENTSCHRIFT

(11) **EP 0 686 166 B1**
(45) Veröffentlichungstag und Bekanntmachung des Hinweises auf die Patenterteilung: **07.05.1997**
(21) Anmeldenummer: 94910319.6
(22) Anmeldetag: 25.02.1994
(51) Int. Cl.: C08G 63/78

(54) **VERFAHREN UND POLYKONDENSATIONSANLAGE ZUR AUFBEREITUNG VON VERUNREINIGTEM ETHYLENGLYKOL**
PROCESS AND POLYCONDENSATION PLANT FOR PROCESSING IMPURE ETHYLENE GLYCOL
PROCEDE ET INSTALLATION DE POLYCONDENSATION UTILE POUR TRAITER L'ETHYLENE GLYCOL POLLUE

(30) Priorität: 27.02.1993 DE 4306144
(43) Veröffentlichungstag der Anmeldung: 13.12.1995
(73) Patentinhaber: JOHN BROWN DEUTSCHE ENGINEERING GmbH, 45130 Essen (DE)
(72) Erfinder: RINK, Jürgen, D-45527 Hattingen (DE); STEMMER, Klaus, D-40882 Ratingen (DE); GEIER, Rudolf, D-45130 Essen (DE)
(74) Vertreter: Honke, Manfred, Dr.-Ing.
(86) Internationale Anmeldenummer: DE9400194
(87) Internationale Veröffentlichungsnummer: WO9419389

(56) Entgegenhaltungen:
- EP-A- 0 240 279
- FR-A- 2 386 572
- GB-A- 2 184 129
- US-A- 4 110 316

## Beschreibung

Die Erfindung betrifft ein Verfahren zur Aufbereitung von verunreinigtem Ethylenglykol, welches im Zuge eines Polykondensationsprozesses zur Herstellung von Polyester anfällt, wonach verunreinigtes Ethylenglykol zum Abtrennen von Wasser und Leichtsiedern vordestilliert und als Destillationsrückstand nachdestilliert und das als Destillat anfallende Ethylenglykol kondensiert wird.

Im Zuge von Polykondensationsprozessen zur Herstellung von Polyester fällt verunreinigtes Ethylenglykol an. So entsteht beispielsweise in der Veresterungsstufe bei der Veresterung von Terephthalsäure mit Ethylenglykol zu Polyester ein Ethylenglykol/Wasser-Gemisch. Dieses Ethylenglykol/Wasser-Gemisch wird einer Vor-Destillierkolonne zugeführt, um Wasser und andere Leichtsieder über Kopf der Vor-Destillierkolonne abzudestillieren und in einem nachgeschalteten Kondensator zu kondensieren. Das Sumpfprodukt bzw. der Destillationsrückstand der aus Ethylenglykol, Diethylenglykol und anderen Nebenprodukten besteht, muß zur Aufbereitung des verunreinigten Ethylenglykols und folglich Rückgewinnung von eben Ethylenglykol einer Off-Line und folglich einer von der Polykondensationsanlage getrennten Destillationsanlage zugeführt werden. Eine solche Off-Line-Destillationsanlage ist in anlagentechnischer Hinsicht aufwendig, verlangt darüber hinaus erhebliche Investitionskosten und ist auch wegen ihres Platz- und Personalbedarfes nachteilig. Hinzu kommt, daß auch das in der Polykondensationsstufe aus den Kreisläufen von Spraykondensatoren und Vakuumpumpen sowie beim An- und Abfahren der Polykondensationsanlagen anfallende verunreinigte Ethylenglykol der Off-Line-Destillationsanlage zugeführt und folglich im Zuge einer diskontinuierlichen Aufbereitung gereinigt werden muß. Im ganzen ist die bekannte Aufbereitung von verunreinigtem Ethylenglykol sowohl in verfahrensmäßiger als auch anlagentechnischer Hinsicht unbefriedigend.

Die US-A 41 10 316 beschäftigt sich mit einem Verfahren zur Aufbereitung von verunreinigtem Ethylenglykol. Dieses Aufbereitungsverfahren wird im Zuge eines direkten Veresterungs- und Polymerisationsprozesses vorgenommen. - Auch hier ist eine von der Polykondensationsanlage getrennte Destillationsvorrichtung vorgesehen.

Der Erfindung liegt die Aufgabe zugrunde, ein Aufbereitungsverfahren der eingangs beschriebenen Ausführungsform anzugeben, wonach sich das im Zuge eines Polykondensationsprozesses anfallende verunreinigte Ethylenglykol in rationeller, funktionssicherer und in anlagentechnischer Hinsicht besonders einfacher Weise einwandfrei reinigen läßt.

Diese Aufgabe löst die Erfindung bei einem gattungsgemäßen Verfahren daduch, daß im Zuge des Polykondensationsprozesses verunreinigtes Ethylenglykol kontinuierlich vordestilliert, als Destillationsrückstand unter Vakuum nachdestilliert, kondensiert und als gereinigtes Ethylenglykol dem Polykondensationsprozess bzw. seinen Verbrauchern wieder zugeführt wird. - Nach Lehre der Erfindung findet eine In-Line-Vakuumdestillation des gesamten verunreinigten Ethylenglykols aus dem Polykondensationsprozess statt. Tatsächlich wird die Ethylenglykol-Rückgewinnung in den Polykondensationsprozess integriert, und zwar im Wege der Verknüpfung von destillativen Prozess- und Aufbereitungsaufgaben. Dadurch wird eine externe Ethylenglykol-Rückgewinnung überflüssig. Die erfindungsgemäße Aufbereitung des Ethylenglykols führt zu einer besonders guten Reinigung, so daß das gereinigte Ethylenglykol für den Einsatz in Polykondensationsanlagen zur Herstellung von hochwertigen Polyesterprodukten wie Granulat für die Herstellung von Mikrofasern, Folien, Filmen und Flaschen besonders geeignet ist. Tatsächlich wird die Qualität von Frischglykol erreicht. In diesem Zusammenhang ist insbesondere von Bedeutung, daß die Nachdestillation im Vakuum stattfindet, so daß die sonst hohe thermisch-oxidative Belastung des Glykols entfällt und eine optimale Produktqualität erreicht wird, nämlich die von Frischglykol. Daraus resultiert eine Einsparung an Frischglykol.

Weitere erfindungswesentliche Maßnahmen sind im folgenden aufgeführt. So sieht die Erfindung vor, daß das in der oder den Veresterungsstufen bei der Veresterung von Terephthalsäure mit Ethylenglykol zu Polyester anfallende Ethylenglykol/Wasser-Gemisch und das in der nachgeschalteten Polykondensationsstufe aus Kreisläufen von Spraykondensatoren und Vakuumpumpen anfallende verunreinigte Ethylenglykol während des Polykondensationsprozesses kontinuierlich zu gereinigtem Ethylenglykol aufbereitet wird, also vordestilliert, der Destillationsrückstand unter Vakuum nachdestilliert, das gereinigte Ethylenglykol als Destillat kondensiert und das rückgewonnene Ethylenglykol dem Polykondensationsprozess bzw. seinen Verbrauchern wieder zugeführt wird. Folglich wird eine kontinuierliche Rückgewinnung auch in bezug auf das in der Polykondensationsstufe anfallende verunreinigte Ethylenglykol erreicht. Erfindungsgemäß wird aber auch das aus dem Anfahr-, Abfahr- und Reinigungsprozess der Polykondensationsanlage anfallende verunreinigte Ethylenglykol nach vorübergehender Speicherung kontinuierlich dem kontinuierlichen Ethylenglykol-Rückgewinnungsprozess zugeführt, beispielsweise in den Veresterungsreaktor eingeleitet. Denn beim Anfahren, Abfahren (Abschalten) und Reinigen der Polykondensationsanlage entsteht sogenanntes Reinigungsglykol, bei dem es sich ebenfalls um verunreinigtes Ethylenglykol handelt. Im Ergebnis wird die Aufbereitung des gesamten in der Polykondensationsanlage benutzten und schließlich verunreinigten Ethylenglykols erreicht.

Gegenstand der Erfindung ist auch eine Polykondensationsanlage zum Herstellen von Polyester, mit zumindest einem Veresterungsreaktor und einer nachgeschalteten Vor-Destillierkolonne mit Kondensator für die Vordestillation von verunreinigtem Ethylenglykol. Diese regelmäßig zwei Veresterungsstufen und eine Polykondensationsstufe aufweisende Polykondensationsanlage ist dadurch gekennzeichnet, daß unten von dem Boden der Vor-Destillierkolonne eine Übergabeleitung für den Destillationsrückstand mit einer Druckreduziervorrichtung, z. B. einem Druckreduzierventil, zu einer Nach-Destillierkolonne führt, daß oben an die Nach-Destillierkolonne ein Kondensator für gereinigtes Ethylenglykol als Destillat angeschlossen ist, daß an den Kondensator einerseits eine zu verschiedenen Verbrauchern führende Rückführungsleitung mit einer Förderpumpe für gereinigtes Ethylenglykol und andererseits eine Vakuumleitung mit einer Vakuumpumpe zum Erzeugen eines Vakuums in der Nach-Destillierkolonne angeschlossen ist, wobei von der Vakuumpumpe druckseitig eine Druckleitung in Förderrichtung vor der Förderpumpe unter Druckausgleich in die Rückführungsleitung führt. - Diese Maßnahmen der Erfindung haben zur Folge, daß auf eine Off-Line und folglich externe Destillationsanlage verzichtet werden kann. Vielmehr wird ein in die eigentliche Polykondensationsanlage integriertes und kontinuierliches arbeitendes Rückgewinnungssystem verwirklicht, welches Investitions-, Gebäude-, Personal- und Energiekosten erheblich vermindert. Energieeinsparung wird schon deshalb erreicht, weil bei der erfindungsgemäßen Polykondensationsanlage keine besondere Aufheizung der Destillierkolonne wie bei einer externen Destillierkolonne im Zuge der Rückgewinnung von Ethylenglykol erforderlich ist. Außerdem arbeitet eine In-Line-Anlage umweltfreundlicher als eine Off-Line-Anlage. Zweckmäßigerweise ist an die Vor-Destillierkolonne eine von Spraykondensatoren und Vakuumpumpen der nachgeschalteten Polykondensationsstufe kommende Zuführungsleitung mit einem Zwischenbehälter angeschlossen, der Pufferfunktion erfüllt, so daß auch das in der Polykondensationsstufe anfallende verunreinigte Ethylenglykol kontinuierlich und ohne externes Rückgewinnungssystem aufbereitet werden kann. Durch den installierten Zwischenbehälter lassen sich Belastungsschwankungen der Vor-Destillierkolonne vermeiden. Die Übergabeleitung für das Sumpfprodukt der Vor-Destillierkolonne bzw. den aus Ethylenglykol, Diethylenglykol und anderen Nebenprodukten bestehenden Destillationsrückstand weist vorsorglich einen Druckentspannungsbehälter auf, so daß in der Nach-Destillierkolonne tatsächlich mit Vakuum bzw. hinreichendem Unterdruck, dagegen in der Vor-Destillierkolonne mit dem üblichen Betriebsdruck gearbeitet werden kann. Um die Reinigung des Ethylenglykols in der Nach-Destillierkolonne zu optimieren, empfiehlt die Erfindung ferner, daß zwischen dem Kondensator für das gereinigte Ethylenglykol und der Förderpumpe ein Rücklaufbehälter in die Rückführungsleitung eingesetzt ist und von dem Rücklaufbehälter eine Rücklaufleitung zu dem Obenende der Nach-Destillierkolonne führt, die dort eine Verteileinrichtung für gereinigtes und im Wege des Rücklaufes zugeführtes Ethylenglykol aufweist. Tatsächlich wird dadurch eine bessere Trennung des Ethylenglykols von Schwersiedern erreicht. Dazu genügt bereits der Rücklauf von lediglich einem geringen Teil des gereinigten Ethylenglykols. An den Boden der Nach-Destillierkolonne ist vorzugsweise eine Abführungsleitung mit einer Förderpumpe für Schwersieder angeschlossen, so daß sich die im Sumpf der NachDestillierkolonne verbleibenden Schwersieder kontinuierlich abführen lassen und vom Anlagenbetreiber zur Entsorgung gegeben werden können. Insoweit wird eine schonende Trennung der Schwersieder - im wesentlichen Diethylenglykol und andere Nebenprodukte - erreicht. Ferner kann in den Veresterungsreaktor, bei dem es sich regelmäßig um den zweiten Veresterungsreaktor der Veresterungsstufe handelt - eine von einem Speicherbehälter kommende Zuführungsleitung für verunreinigtes Ethylenglykol münden. Denn dieser Speicherbehälter dient zur Aufnahme von kontaminiertem Ethylenglykol, welches im Zuge des Anfahrens, Abfahrens und Reinigens der Polykondensationsanlage anfällt.

Im Ergebnis wird das gesamte, im Polykondensationsprozeß umlaufende Ethylenglykol ohne externe Aufarbeitung gereinigt und kann als gleichsam Frischglykol wieder eingesetzt werden. Dadurch wird das Polykondensationsverfahren insgesamt wirtschaftlicher gestaltet. In der Begrenzung der thermisch-oxidativen Belastung des gereinigten Ethylenglykols durch die Nachdestillation im Vakuum wird im Zuge einer In-Line-Destillation die Spezifikation von eben Rein- bzw. Frischglykol erreicht.

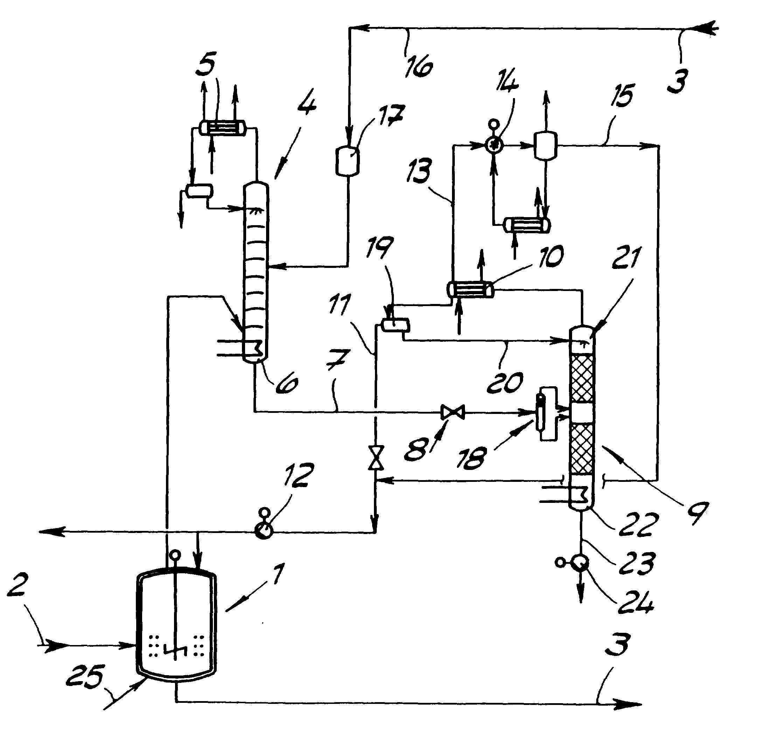

Im folgenden wird die Erfindung anhand einer lediglich ein Ausführungsbeispiel darstellenden Zeichnung näher erläutert. Die einzige Figur zeigt den zur kontinuierlichen Aufbereitung von verunreinigtem Ethylenglykol eingerichteten Teil einer Polykondensationsanlage.

Der in der Figur dargestellte Anlagenteil aus einer Polykondensationsanlage zum Herstellen von Polyester läßt einen Veresterungsreaktor 1 der vorgeschalteten und nicht dargestellten Veresterungsstufe 2 erkennen, an den sich die ebenfalls nicht dargestellte Polykondensationsstufe 3 anschließt. Dem Veresterungsreaktor 1 ist eine Vor-Destillierkolonne 4 mit Kondensator 5 nachgeschaltet. In der Vor-Destillierkolonne 4 werden Wasser und Leichtsieder von einem Ethylenglykol/Wasser-Gemisch aus dem Veresterungsreaktor 1 abdestilliert, im Kondensator 5 kondensiert und an die Atmosphäre abgegeben bzw. der Abwasserbehandlung zugeführt. Von dem Sumpf bzw. Boden 6 der Vor-Destillierkolonne 4 führt eine Übergabeleitung 7 für den Destillationsrückstand aus Ethylenglykol, Diethylenglykol und anderen Nebenprodukten mit einer lediglich angedeuteten Druckreduziervorrichtung 8, z. B. einem Druckreduzierventil, zu einer Nach-Destillierkolonne 9. An diese Nach-Destillierkolonne 9 ist oben ein Kondensator 10 für das Destillat und folglich gereinigtes Ethylenglykol angeschlossen. An den Kondensator 10 ist einerseits eine zu verschiedenen Verbrauchern der Polykondensationsanlage führende Rückführungsleitung 11 mit einer Förderpumpe 12 für gereinigtes Ethylenglykol und andererseits eine Vakuumleitung 13 mit einer Vakuumpumpe 14 zum Erzeugen eines Vakuums in der Nach-Destillierkolonne 9 angeschlossen. Von der Vakuumpumpe 14 führt druckseitig eine Druckleitung 15 in Förderrichtung vor der Förderpumpe 12 unter Druckausgleich in die Rückführungsleitung 11. Dadurch wird von der Vakuumpumpe 14 angesaugtes gereinigtes Ethylenglykol der Rückführungsleitung 11 für das im übrigen gereinigte Ethylenglykol zugeführt.

An die Vor-Destillierkolonne 4 ist eine von Spraykondensatoren und Vakuumpumpen der nachgeschalteten Polykondensationsstufe 3 kommende Zuführungsleitung 16 mit einem Zwischenbehälter 17 angeschlossen. Diese Zuführungsleitung 16 dient also zum Zuführen von verunreinigtem Ethylenglykol, welches in der Polykondensationsstufe 3 anfällt. Denn dort führen nicht niedergeschlagene Dämpfe zu einer Anreicherung von verunreinigtem Ethylenglykol in den Vakuumpumpen, die wiederum für die im Vakuum betriebene Polykondensationsstufe 3 erforderlich sind.

In die Übergabeleitung 7 zwischen der Vor-Destillierkolonne 4 und der Nach-Destillierkolonne 9 ist vorsorglich noch ein Druckentspannungsbehälter 18 eingesetzt, um die zwischen der Vor-Destillierkolonne 4 und der Nach-Destillierkolonne 9 erforderliche Druckreduzierung mit Sicherheit zu gewährleisten. Zwischen dem Kondensator 10 für das gereinigte Ethylenglykol und der Förderpumpe 12 ist ein Rücklaufbehälter 19 in die Rückführungsleitung 11 eingesetzt. Von diesem Rücklaufbehälter 19 führt eine Rücklaufleitung 20 zu dem Obenende der Nach-Destillierkolonne 9, die eine Sprüheinrichtung 21 für gereinigtes Ethylenglykol aufweist. Insoweit wird lediglich ein geringer Teil des gereinigten Ethylenglykols im Wege des Rücklaufs der Nach-Destillierkolonne 9 zugeführt, um dort den Reinigungseffekt zu erhöhen. An den Boden 22 der Nach-Destillierkolonne 9 ist eine Abführungsleitung 23 mit einer Förderpumpe 24 für Schwersieder angeschlossen.

In den Veresterungsreaktor 1 führt eine von einem Speicherbehälter kommende Zuführungsleitung 25 für verunreinigtes Ethylenglykol, welches im Zuge des Anfahrens, Abfahrens und Reinigens der Polykondensationsanlage anfällt.

## Patentansprüche

1. Verfahren zur Aufbereitung von verunreinigtem Ethylenglykol, welches im Zuge eines Polykondensationsprozesses zur Herstellung von Polyester anfällt, wonach verunreinigtes Ethylenglykol zum Abtrennen von Wasser und Leichtsiedern vordestilliert und als Destillationsrückstand nachdestilliert und das als Destillat anfallende Ethylenglykol kondensiert wird, **dadurch gekennzeichnet,** daß im Zuge des Polykondensationsprozesses verunreinigtes Ethylenglykol kontinuierlich vordestilliert, als Destillationsrückstand unter Vakuum nachdestilliert, kondensiert und als gereinigtes Ethylenglykol dem Polykondensationsprozeß bzw. seinen Verbrauchern wieder zugeführt wird.

2. Verfahren nach Anspruch 1, dadurch gekennzeichnet, daß das in der oder den Veresterungsstufen bei der Veresterung von Terephthalsäure mit Ethylenglykol zu Polyester anfallende Ethylenglykol/Wasser-Gemisch und das in der nachgeschalteten Polykondensationsstufe aus Kreisläufen von Spraykondensatoren und Vakuumpumpen anfallende verunreinigte Ethylenglykol während des Polykondensationsprozesses kontinuierlich zu gereinigtem Ethylenglykol im Wege der Vordestillation, Nachdestillation unter Vakuum und Kondensation aufbereitet wird.

3. Verfahren nach Anspruch 1 oder 2, dadurch gekennzeichnet, daß das aus dem Anfahr-, Abfahr- und Reinigungsprozeß der Polykondensationsanlage anfallende verunreinigte Ethylenglykol nach vorübergehender Speicherung kontinuierlich dem kontinuierlichen Ethylenglykol-Rückgewinnungsprozeß zugeführt wird.

4. Polykondensationsanlage zum Herstellen von Polyester, mit zumindest einem Veresterungsreaktor und einer nachgeschalteten Vor-Destillierkolonne mit Kondensator für die Vordestillation von verunreinigtem Ethylenglykol, dadurch gekennzeichnet, daß von dem Boden (6) der Vor-Destillierkolonne (4) eine Übergabeleitung (7) für den Destillationsrückstand mit einer Druckreduziervorrichtung (8) zu einer Nach-Destillierkolonne (9) führt, daß oben an die Nach-Destillierkolonne (9) ein Kondensator (10) für als gereinigtes Ethylenglykol anfallendes Destillat angeschlossen ist, daß an den Kondensator (10) einerseits eine zu verschiedenen Verbrauchern führende Rückführungsleitung (11) mit einer Förderpumpe (12) für gereinigtes Ethylenglykol und andererseits eine Vakuumleitung (13) mit einer Vakuumpumpe (14) zum Erzeugen eines Vakuums in der Nach-Destillierkolonne (9) angeschlossen ist, wobei von der Vakuumpumpe (14) druckseitig eine Druckleitung (15) in Förderrichtung vor der Förderpumpe (12) unter Druckausgleich in die Rückführungsleitung (11) geführt ist.

5. Polykondensationsanlage nach Anspruch 4, dadurch gekennzeichnet, daß an die Vor-Destillierkolonne (4) eine von Spraykondensatoren und Vakuumpumpen der nachgeschalteten Polykondensationsstufe (3) kommende Zuführungsleitung (16) mit einem Zwischenbehälter (17) angeschlossen ist.

6. Polykondensationsanlage nach Anspruch 4 oder 5, dadurch gekennzeichnet, daß in die Übergabeleitung (7) ein Druckentspannungsbehälter (18) eingesetzt ist.

7. Polykondensationsanlage nach einem der Ansprüche 4 bis 6, dadurch gekennzeichnet, daß zwischen dem Kondensator (10) für das gereinigte Ethylenglykol und der Förderpumpe (12) ein Rücklaufbehälter (19) in die Rückführungsleitung (11) eingesetzt ist und von dem Rücklaufbehälter (19) eine Rücklaufleitung (20) zu dem Obenende der Nach-Destillierkolonne (9) führt, die eine Verteileinrichtung (21) für rücklaufendes gereinigtes Ethylenglykol aufweist.

8. Polykondensationsanlage nach einem der Ansprüche 4 bis 7, dadurch gekennzeichnet, daß an den Boden (22) der Nach-Destillierkolonne (9) eine Abführungsleitung (23) mit einer Förderpumpe (24) für Schwersieder angeschlossen ist.

9. Polykondensationsanlage nach einem der Ansprüche 4 bis 8, dadurch gekennzeichnet, daß in den Veresterungsreaktor (1) eine von einem Speicherbehälter kommende Zuführungsleitung (25) für verunreinigtes Ethylenglykol mündet.

## Claims

1. Process for working up contaminated ethylene glycol which is obtained in the course of a polycondensation process for the preparation of polyesters, in which contaminated ethylene glycol is subjected to preliminary distillation for separating off water and low boilers and is subjected to subsequent distillation as a distillation residue, and the ethylene glycol obtained as the distillate is condensed, characterized in that, in the course of the polycondensation process, contaminated ethylene glycol is continuously subjected to preliminary distillation, subjected to subsequent distillation as the distillation residue under reduced pressure, condensed, and recycled in the form of purified ethylene glycol to the polycondensation process or its consumers.

2. Process according to Claim 1, characterized in that the ethylene glycol/water mixture obtained in the esterification stage or stages during the esterification of terephthalic acid with ethylene glycol to polyester, and the contaminated ethylene glycol obtained in the downstream polycondensation stage from circulations of spray condensers and vacuum pumps, are worked up continuously during the polycondensation process to give purified ethylene glycol by a procedure involving preliminary distillation, subsequent distillation under reduced pressure and condensation.

3. Process according to Claim 1 or 2, characterized in that the contaminated ethylene glycol obtained from the startup, shutdown and purification process of the polycondensation plant is temporarily stored and then continuously fed to the continuous ethylene glycol recovery process.

4. Polycondensation plant for the production of polyesters, having at least one esterification reactor and one downstream preliminary distillation column with condenser for the preliminary distillation of contaminated ethylene glycol, characterized in that a transfer line (7) for the distillation residue, having a pressure-reducing apparatus (8), leads from the bottom (6) of the preliminary distillation column (4) to a subsequent distillation column (9), that a condenser (10) for distillate obtained as purified ethylene glycol is connected to the top of the subsequent distillation column (9), and that on the one hand a recycle line (11) leading to various consumers and having a delivery pump (12) for purified ethylene glycol and, on the other hand, a vacuum line (13) having a vacuum pump (14) for generating a vacuum in the subsequent distillation column (9) are connected to the condenser (10), a pressurized line (15) being led from the pressure side of the vacuum pump (14) upstream of the delivery pump (12) in the delivery direction, with pressure equilibration, to the recycle line (11).

5. Polycondensation plant according to Claim 4, characterized in that a delivery line (16) which is led from spray condensers and vacuum pumps of the downstream polycondensation stage (3) and has an intermediate container (17) is connected to the preliminary distillation column (4).

6. Polycondensation plant according to Claim 4 or 5, characterized in that a pressure-relief container (18) is inserted in the transfer line (7).

7. Polycondensation plant according to any of Claims 4 to 6, characterized in that a reflux container (19) is inserted in the recycle line (11), between the condenser (10) for the purified ethylene glycol and the delivery pump (12), and a reflux line (20) leads from the reflux container (19) to the upper end of the subsequent distillation column (9), which has a distribution means (21) for refluxing purified ethylene glycol.

8. Polycondensation plant according to any of Claims 4 to 7, characterized in that a discharge line (23) having a delivery pump (24) for high boilers is connected to the bottom (22) of the subsequent distillation column (9).

9. Polycondensation plant according to any of Claims 4 to 8, characterized in that a feed line (25) which is led from a storage container and carries contaminated ethylene glycol enters the esterification reactor (1).

## Revendications

1. Procédé de traitement d'éthylèneglycol impur, qui se forme au cours d'un processus de polycondensation pour la fabrication de polyester, selon lequel l'éthylèneglycol impur est prédistillé en vue de la séparation de l'eau et de substances à faible point d'ébullition et est redistillé en tant que résidu de distillation et l'éthylèneglycol se formant en tant que distillat est condensé, caractérisé en ce qu'au cours du processus de polycondensation l'éthylèneglycol impur est prédistillé en continu, est redistillé sous vide en tant que résidu de distillation, est condensé et est renvoyé au processus de polycondensation ou à ses utilisateurs, en tant qu'éthylèneglycol épuré.

2. Procédé selon la revendication 1, caractérisé en ce que le mélange d'éthylèneglycol et d'eau qui se forme au cours de la ou des étapes d'estérification lors de l'estérification de l'acide térephthalique avec de l'éthylèneglycol pour donner du polyester, et l'éthylèneglycol impur, se formant au cours de l'étape de polycondensation venant ensuite, provenant de circuits de condenseurs pulvérisateurs et de pompes à vide est traité en continu pendant le processus de polycondensation, en éthylèneglycol épuré, par prédistillation, redistillation sous vide et condensation.

3. Procédé selon la revendication 1 ou 2, caractérisé en ce que l'éthylèneglycol impur, provenant du processus de démarrage, d'arrêt et de nettoyage de l'installation de polycondensation, est envoyé en continu, après stockage provisoire, au processus de récupération continu d'éthylèneglycol.

4. Installation de polycondensation pour la fabrication de polyester, comportant au moins un réacteur d'estérification et une colonne de prédistillation située en aval avec condenseur pour la prédistillation d'éthylèneglycol impur, caractérisée en ce que du fond (6) de la colonne de prédistillation (4), une conduite de transfert (7) pour le résidu de distillation avec un dispositif de réduction de pression (8), mène à une colonne de redistillation (9), en ce qu'à la partie supérieure de la colonne de redistillation (9) est raccordé un condenseur (10) pour le distillat se présentant sous la forme d'éthylèneglycol épuré, en ce qu'au condenseur (10) est raccordé d'une part une conduite de retour (11), menant à différents utilisateurs avec une pompe de circulation (12) pour l'éthylèneglycol épuré, et d'autre part, une conduite de vide (13) avec une pompe à vide (14) pour la production d'un vide dans la colonne de redistillation (9), une conduite de pression (15) menant, de la pompe à vide (14), côté pression, devant la pompe à vide (12) dans le sens de circulation, par compensation de pression, dans la conduite de retour (11).

5. Installation de polycondensation selon la revendication 4, caractérisée en ce qu'à la colonne de prédistillation (4) est raccordée une conduite d'alimentation (16), provenant des condenseurs pulvérisateurs et pompes à vide de l'étape de polycondensation (3) ultérieure, avec un réservoir intermédiaire (17).

6. Installation de polycondensation selon la revendication 4 ou 5, caractérisée en ce que dans la conduite de transfert (7) est inséré un réservoir de détente de pression (18).

7. Installation de polycondensation selon l'une des revendications 4 à 6, caractérisée en ce qu'entre le condenseur (10) pour l'éthylèneglycol épuré et la pompe de circulation (12), un réservoir de retour (19) est inséré dans la conduite de retour (11) et à partir du réservoir de retour (19), une conduite de retour (20) mène à l'extrémité supérieure de la colonne de redistillation (9), qui comporte un dispositif de distribution (21) pour l'éthylèneglycol épuré de retour.

8. Installation de polycondensation selon l'une des revendications 4 à 7, caractérisée en ce qu'au fond (22) de la colonne de redistillation (9) est raccordée une conduite d'évacuation (23) avec une pompe de circulation (24) pour des substances à bas point d'ébullition.

9. Installation de polycondensation selon l'une des revendications 4 à 8, caractérisée en ce que dans le réacteur d'estérification (1) débouche une conduite d'alimentation (25), provenant d'un réservoir stockeur, pour l'éthylèneglycol impur.
